# EUROPÄISCHE PATENTANMELDUNG

(11) **EP 3 572 469 A1**
(43) Veröffentlichungstag der Anmeldung: **27.11.2019**
(21) Anmeldenummer: 18174213.1
(22) Anmeldetag: 25.05.2018
(51) Int. Cl.: C09C 1/00, C09K 8/03, C08L 69/00

(54) **POLYCARBONATZUSAMMENSETZUNG MIT PERLGLANZPIGMENT UND/ODER INTERFERENZPIGMENT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft Zusammensetzungen auf Basis von aromatischem Polycarbonat, enthaltend Metalloxid-beschichteten Glimmer als Effektpigment, die keinen signifikanten Molekulargewichtsabbau des Polycarbonats, erkennbar an der MVR, unter thermischer Beanspruchung aufweisen. Dieses wird erreicht durch die Zugabe geringer Mengen eines Epoxidgruppen-haltigen Copolymers oder Terpolymers aus Styrol und Acrylsäure und/oder Methacrylsäure, bevorzugt in Kombination mit Phosphor-haltigem Thermostabilisator.

## Beschreibung

Die Erfindung betrifft thermoplastische Polycarbonat-Zusammensetzungen, enthaltend Interferenz- und/oder Perlglanzpigment aus der Gruppe der Metalloxid-beschichteten Glimmer, sowie Formteile aus diesen Zusammensetzungen.

Polycarbonatzusammensetzungen werden teilweise Effektpigmente zugegeben, um das Aussehen der Zusammensetzungen durch winkelabhängige Farbton- und/oder Glanzänderungen zu beeinflussen. Effektpigmente sind plättchenförmig und bewirken eine gerichtete Reflexion und/oder Interferenz. Es gibt verschiedene Gruppen von Effektpigmenten: Metalleffektpigmente, Interferenzpigmente und Perlglanzpigmente, wobei insbesondere die Grenzen zwischen letzteren fließend sein können und diese daher auch zusammenfassend als "spezielle Effektpigmente" bezeichnet werden.

Perlglanzpigmente umfassen transparente Plättchen mit hohem Brechungsindex. Durch Mehrfachreflexion entsteht ein perlenähnlicher Effekt. Die Farbgebung bei Interferenzpigmenten, die sowohl transparent als auch opak sein können, beruht vornehmlich auf Interferenz.

Zu den Perlglanz- und/oder Interferenzpigmenten zählen insbesondere auch Metalloxidbeschichtete Glimmerpigmente, die in verschiedenen Bereichen, etwa für Gehäuse zahlreicher Geräte im Haushalt oder der Unterhaltungselektronik oder als Designelement im Architekturbereich, Anwendung finden. Perlglanzeffekte und /oder Interferenzpigmente dieser Art sind unter Anderem unter den Namen "Magnapearl®" oder "Mearlin®" von der BASF SE oder unter den Namen "Iriodin®" oder "Candurin®" von der Merck SE erhältlich.

Bei Einsatz in Polycarbonat-Zusammensetzungen führen Perlglanzpigmente bzw. Interferenzpigmente aus der Gruppe der Metalloxid-beschichteten Glimmer üblicherweise zu einem signifikanten Abbau des Polycarbonates, was sich in einer Reduzierung des Molekulargewichtes und einer damit verbundenen Reduzierung der Viskosität und damit Erhöhung der Schmelzevolumenfließrate MVR und Verschlechterung der mechanischen Eigenschaften zeigt. Die Abbauprozesse führen außerdem zu einer Verfärbung des Materials.

Bei auf dem Markt befindlichen Zusammensetzungen werden die Abbauprozesse dadurch berücksichtigt, dass Polycarbonat mit höherem Molekulargewicht als für die eigentliche Anwendung benötigt eingesetzt wird. Das Ziel-Molekulargewicht wird dann durch die Compoundier- und Spritzguss- bzw. Extrusionsprozesse bei erhöhter Temperatur erreicht. Auch haben weitere Parameter im Compoundierprozess, wie die Steuerung des Energieeintrages oder die Anordnung der Dosierstelle für das Effektpigment, einen wesentlichen Einfluss auf das sich letztlich ergebende Molekulargewicht des Polycarbonats. Dabei zeigte sich jedoch, dass eine gezielte Steuerung des Molekulargewichts problematisch ist.

Eine grundsätzliche Möglichkeit, den Abbau von Polycarbonat zu minimieren, ist die Verwendung von Thermostabilisatoren. Zur Thermostabilisierung von Polycarbonat werden üblicherweise im Wesentlichen geeignete organische Phosphorverbindungen wie aromatische Phosphine, aromatische Phosphite und organische Antioxidantien, insbesondere sterisch gehinderten Phenole, zugesetzt. Häufig wird die Verwendung von Phosphiten in Kombination mit sterisch gehinderten Phenolen beschrieben, etwa in der EP 0 426 499 A1. Die Stabilisierung nur durch Phosphite ist jedoch im Fall der beschriebenen Effektpigmente nicht ausreichend.

Aufgabe war es somit, Polycarbonat-Zusammensetzungen, enthaltend Perlglanz- und/oder Interferenzpigmente aus der Gruppe der Metalloxid-beschichteten Glimmer, bereitzustellen, die einen möglichst geringeren Abbau des Polycarbonates während der Compoundierung zeigen, so dass die vorstehend beschriebenen Nachteile möglichst vermieden werden.

Überraschend wurde gefunden, dass die Aufgabe durch Zusatz von Epoxidgruppen-haltigen Copolymer oder Terpolymer aus Styrol und Acrylsäure und/oder, vorzugsweise in Kombination mit einem Thermostabilisator, insbesondere einer Thermostabilisator-Mischung, enthaltend Phosphor-haltigen Stabilisator, zu einer Polycarbonatzusammensetzung, enthaltend Perlglanz- und/oder Interferenzpigment(e) aus der Gruppe der Metalloxid-beschichteten Glimmer, gelöst wird.

Erfindungsgemäße thermoplastische Zusammensetzungen sind daher solche, enthaltend
A) 50 Gew.-% bis 98,5 Gew.-% aromatisches Polycarbonat und
B) 0,8 Gew.-% bis ≤ 5,0 Gew.-% Interferenzpigment und/oder Perlglanzpigment aus der Gruppe der Metalloxid-beschichteten Glimmer,
   dadurch gekennzeichnet, dass die Zusammensetzung außerdem
C) 0,05 Gew.-% bis ≤ 3 Gew.-% eines Epoxidgruppen-haltigen Copolymers oder Terpolymers aus Styrol und Acrylsäure und/oder Methacrylsäure enthält,
und vorzugsweise solche thermoplastischen Zusammensetzungen, enthaltend außerdem
D) 0,001 Gew.-% bis 0,500 Gew.-% eines oder mehrerer Thermostabilisatoren,
E) weitere Additive, weiter bevorzugt 0 bis 10 Gew.-%, besonders bevorzugt ausgewählt aus der Gruppe, bestehend aus Flammschutzmitteln, Antitropfmitteln, Schlagzähmodifikatoren, Füllstoffen, Antistatika, Farbmitteln, einschließlich von Komponente B verschiedenen Pigmenten, auch umfassend Ruß, Gleit- und/oder Entformungsmitteln, Hydrolysestabilisatoren, Verträglichkeitsvermittlern, UV-Absorbern und/oder IR-Absorbern.

### Komponente A

Bei Komponente A handelt es sich um aromatisches Polycarbonat. Unter "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate, einschließlich der thermoplastischen, aromatischen Polyestercarbonate, haben mittlere Molekulargewichte M_{w}, bestimmt mittels Gelpermeationschromotographie nach DIN 55672-1:2007-08, kalibriert gegen Bisphenol A-Polycarbonat-Standards unter Verwendung von Dichlormethan als Elutionsmittel, von 10.000 g/mol bis 35.000 g/mol, vorzugsweise von 12.000 g/mol bis 32.000 g/mol, weiter bevorzugt von 15.000 g/ mol bis 32.000 g/mol, insbesondere von 20.000 g/mol bis 31.500 g/mol, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, US 5,340,905 A, US 5,097,002 A, US-A 5,717,057 A).

Die Herstellung aromatischer Polycarbonate erfolgt z.B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Dihydroxyarylverbindungen mit beispielsweise Diphenylcarbonat möglich.

Für die Herstellung von Polycarbonaten geeignete Dihydroxyarylverbindungen sind solche der Formel (1)

HO-Z-OH (1),

in welcher
- Z e: in aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 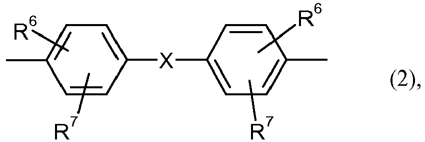 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

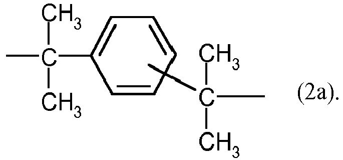

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie die Bisphenole (I) bis (III) 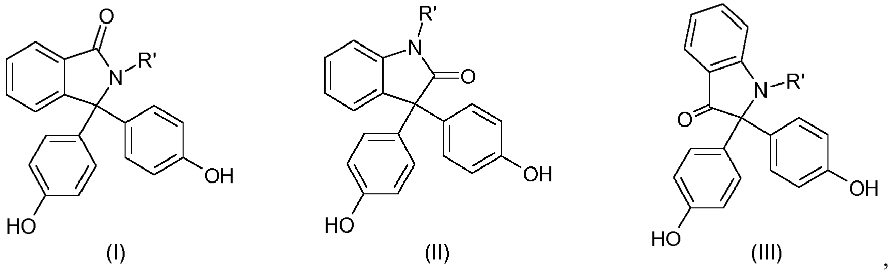 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Dihydroxyarylverbindungen sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A sowie die Diphenole der Formeln (I), (II) und (III).

Diese und weitere geeignete Dihydroxyarylverbindungen sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur eine Dihydroxyarylverbindung eingesetzt, im Fall der Copolycarbonate werden mehrere Dihydroxyarylverbindungen eingesetzt. Die verwendeten Dihydroxyarylverbindungen, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C₁- bis C₃₀-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan, sowie von den Diphenolen der Formeln (I), (II) und/oder (III) 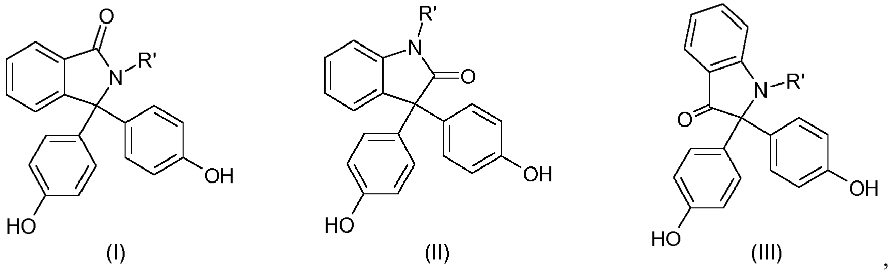 in denen R' jeweils für C₁- bis C₄-Alkyl, Aralkyl oder Aryl, bevorzugt für Methyl oder Phenyl, ganz besonders bevorzugt für Methyl, steht,
abgeleitete Homo- oder Copolycarbonate, insbesondere mit Bisphenol A.

Zur Einarbeitung von Additiven wird die Komponente A bevorzugt wenigstens teilweise in Form von Pulvern, Granulaten oder Gemischen aus Pulvern und Granulaten eingesetzt.

Das Polycarbonat weist bevorzugt eine MVR von 5 bis 20 cm³/(10 min), weiter bevorzugt von 5,5 bis 12 cm³/(10 min), noch weiter bevorzugt bis 8 cm³/(10 min), bestimmt nach ISO 1133:2012-03 bei einer Prüftemperatur von 300 °C und 1,2 kg Belastung, auf.

Als Polycarbonat kann auch eine Mischung aus verschiedenen Polycarbonaten eingesetzt werden, z.B. aus den Polycarbonaten A1 und A2:
Die Menge des aromatischen Polycarbonats A1 beträgt bevorzugt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 5 bis 15 cm³/10 min, weiter bevorzugt mit einer Schmelze-Volumenfließrate MVR von 6 bis 12 cm³/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt bevorzugt, bezogen auf die Gesamtmenge an Polycarbonat, 2,0 bis 12,0 Gew.-%, bevorzugt 3,0 bis 11,0 Gew.-%, besonders bevorzugt 4,0 bis 10,0 Gew.-%, ganz besonders bevorzugt von 5,0 bis 8,0 Gew.-%, wobei dieses aromatische Polycarbonat bevorzugt auf Basis von Bisphenol A mit einer bevorzugten Schmelze-Volumenfließrate MVR von 12 bis 65 cm³/(10 min), weiter bevorzugt mit einer Schmelze-Volumenfließrate MVR von 14 bis 32 cm³/(10 min), und besonders bevorzugt mit einer Schmelze-Volumenfließrate MVR von 15 bis 20 cm³/(10 min) ist.

Insgesamt werden in den erfindungsgemäßen Zusammensetzungen 50 bis 98,5 Gew.-%, bevorzugt 80 bis 98,0 Gew.-%, weiter bevorzugt 85 bis 97,5 Gew.-%, besonders bevorzugt 90,0 bis 97,5 Gew.-%, ganz besonders bevorzugt 93,0 Gew.-% bis 97,5 Gew.-%, aromatisches Polycarbonat eingesetzt.

### Komponente B

Bei Komponente B der erfindungsgemäßen Zusammensetzungen handelt es sich um Interferenzpigmente und/oder Perlglanzpigmente aus der Gruppe der Metalloxid-beschichteten Glimmer. Der Glimmer kann natürlich vorkommender oder synthetisch hergestellter Glimmer sein, wobei letzterer aufgrund der üblicherweise höheren Reinheit bevorzugt ist. Glimmer, der aus der Natur gewonnen wird, ist üblicherweise von weiteren Mineralien begleitet. Komponente B "Glimmer" bei aus der Natur gewonnenem Glimmer umfasst mit der angegebenen Menge auch entsprechende Verunreinigungen. Der Glimmer ist vorzugsweise Muskovit-basiert, d.h. er umfasst bevorzugt mindestens 60 Gew.-%, weiter bevorzugt mindestens 70 Gew.-%, noch weiter bevorzugt mindestens 85 Gew.-%, besonders bevorzugt mindestens 90 Gew. % Muskovit, bezogen auf das Gesamtgewicht des Glimmeranteils - ohne Metalloxid-Beschichtung - des Interferenz- und/oder Perlglanzpigmentes.

Die Metalloxid-Beschichtung umfasst vorzugsweise eine oder mehrere Beschichtungsschichten, enthaltend Titandioxid, Zinnoxid, Aluminiumoxid und/oder Eisenoxid, wobei das Metalloxid weiter bevorzugt Eisen(III)-oxid (Fe₂O₃), Eisen(II, III)-oxid (Fe₃O₄, eine Mischung aus Fe₂O₃ und FeO) und/oder Titandioxid ist, besonders bevorzugt Titandioxid. Ganz besonders bevorzugt ist Komponente B ein Titandioxid-beschichteter Glimmer.

Der Anteil des Titandioxids am Gesamtgewicht des Pigments beträgt vorzugsweise 30 bis 60 Gew.-%, noch weiter bevorzugt 35 bis 55 Gew.-% und der Anteil des Glimmers vorzugsweise 40 bis 70 Gew.-%, noch weiter bevorzugt 45 bis 65 Gew.-%.

Als Titandioxid sind Rutil und/oder Anatas bevorzugt. Besonders bevorzugt umfasst das Pigment Anatas-beschichteten Glimmer, ganz besonders bevorzugt sind mindestens 90 Gew.-%, bevorzugt 95 Gew.-%, weiter bevorzugt mindestens 98 Gew.-%, der Pigmentkomponente B Anatas-beschichteter Glimmer.

Um die Verträglichkeit mit der Polymermatrix aus Polycarbonat zu erhöhen, ist das Pigment vorzugsweise zusätzlich mit einer Silikat- und/oder Siliciumdioxid-Beschichtung versehen, insbesondere einer Sol-Gel-Beschichtung. Hierdurch wird üblicherweise gleichzeitig die Wetter- und Chemikalienbeständigkeit des Pigmentes erhöht.

Die mittlere Partikelgröße (D50) des Pigments, bestimmt mittels Laserdiffraktometrie an einer wässrigen Aufschlämmung des Pigments, beträgt bevorzugt 1 bis 100 µm, bei synthetischem Glimmer weiter bevorzugt 5 bis 80 µm und bei natürlichem Glimmer weiter bevorzugt 3 bis 30 µm, generell bei Glimmer besonders bevorzugt 3,5 bis 15 µm, ganz besonders bevorzugt 4,0 bis 10 µm, äußerst bevorzugt 4,5 bis 8,0 µm. Der D90-Wert, ebenfalls bestimmt mittels Laserdiffraktometrie an einer wässrigen Aufschlämmung des Pigments, beträgt bei synthetischem Glimmer vorzugsweise 10 bis 150 µm und bei natürlichem Glimmer vorzugsweise 5 bis 80 µm. Die Dichte des Pigments beträgt vorzugsweise 2,5 bis 5,0 g/cm³, weiter bevorzugt 2,8 bis 4,0 g/cm³, bestimmt nach DIN EN ISO 1183-1:2013-04.

Der Anteil des mindestens einen Metalloxid-beschichteten Glimmers an der gesamten auf Polycarbonat-basierenden Zusammensetzung beträgt 0,8 Gew.-% bis ≤ 5,0 Gew.-%, bevorzugt 1,0 bis ≤ 3,0 Gew.-%, weiter bevorzugt 1,2 Gew.-% bis 2,5 Gew.-%, besonders bevorzugt 1,5 Gew.-% bis 2,0 Gew.-%.

### Komponente C

Komponente C der erfindungsgemäßen Zusammensetzungen ist ein Epoxidgruppen-haltiges Copolymer oder Terpolymer aus Styrol und Acrylsäure und/oder Methacrylsäure. Bevorzugt umfasst Komponente C ein Copolymer aus Styrol und 2,3-Epoxypropylmethacrylat, besonders bevorzugt ist Komponente C ein Copolymer aus Styrol und 2,3-Epoxypropylmethacrylat.

Das Copolymer bzw. Terpolymer gemäß Komponente C, insbesondere das Copolymer aus Styrol und 2,3-Epoxypropylmethacrylat, weist bevorzugt einen Styrol-Gehalt, bestimmt mittels ¹H-NMR-Spektroskopie in CDCl₃, von 30 bis 70 Gew.-%, weiter bevorzugt 40 bis 60 Gew.-%, besonders bevorzugt von 50 bis 55 Gew.-%, auf.

Die gewichtsmittlere Molmasse des Copolymers bzw. Terpolymers gemäß Komponente C, insbesondere des Copolymers aus Styrol und 2,3-Epoxypropylmethacrylat, bestimmt mittels Gelpermeationschromatographie in o-Dichlorbenzol bei 150°C unter Verwendung von Polystyrol-Standards, beträgt bevorzugt 2000 bis 25000 g/mol, weiter bevorzugt 3000 bis 15000 g/mol, noch weiter bevorzugt 5000 bis 10000 g/mol, besonders bevorzugt 6000 bis 8000 g/mol.

Der Epoxid-Anteil des Polymers gemäß Komponente C beträgt bevorzugt 5 bis 20 Gew.%, weiter bevorzugt 7 bis 18 Gew.-%, besonders bevorzugt 10 bis 15 Gew.-%, bestimmt nach DIN EN 1877-1:2000.

Derartige Polymere werden beispielsweise von der BASF SE unter der Marke Joncryl® ADR vertrieben.

Die Menge an Komponente C in der Gesamtzusammensetzung beträgt 0,05 Gew.-% bis ≤ 3 Gew.-%, bevorzugt 0,1 Gew.-% bis 2,0 Gew.-%, weiter bevorzugt 0,12 Gew.-% bis 1,5 Gew.-%, besonders bevorzugt 0,15 Gew.-% bis ≤ 1 Gew.-%, insbesondere bis ≤ 0,5 Gew.-%.

### Komponente D

Die erfindungsgemäßen Zusammensetzungen enthalten bevorzugt mindestens einen Thermostabilisator, weiter bevorzugt mindestens einen Phosphor-haltigen Thermostabilisator, noch weiter bevorzugt einen Phosphin- und/oder Phosphit-haltigen Thermostabilisator. "Phosphor-haltig" bedeutet hierbei, dass Phosphor nicht in irgendeiner Form als bloße Verunreinigung in Komponente D enthalten ist, sondern dass die Strukturformel des Thermostabilisators ein Phosphor-Atom umfasst.

Bevorzugte erfindungsgemäße Zusammensetzungen enthalten mindestens einen Stabilisator auf Phosphinbasis, mindestens einen Stabilisator auf Phosphitbasis und mindestens einen Stabilisator aus der Gruppe der phenolischen Antioxidantien, welche eine besonders gute Stabilisatorkombination darstellen.

Andere erfindungsgemäße Zusammensetzungen enthalten z.B. mindestens einen Stabilisator auf Phosphinbasis, mindestens einen Stabilisator auf Phosphonitbasis, insbesondere auf Diphosphonitbasis, und mindestens einen Stabilisator aus der Gruppe der phenolischen Antioxidantien.

Die erfindungsgemäßen Zusammensetzungen enthalten vorzugsweise 0,001 bis 0,500 Gew.-%, bevorzugt 0,005 bis 0,300 Gew.-%, weiter bevorzugt 0,05 Gew.-% bis 0,270 Gew.-%, noch weiter bevorzugt 0,15 bis 0,25 Gew.-% , besonders bevorzugt 0,08 bis 0,18 Gew.-%, eines oder mehrerer Thermostabilisatoren, wobei ganz besonders bevorzugt mindestens ein Phosphor-haltiger Thermostabilisator enthalten ist, insbesondere mindestens ein Stabilisator auf Phosphinbasis, mindestens ein Stabilisator auf Phosphitbasis und mindestens einen Stabilisator aus der Gruppe der phenolischen Antioxidantien.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen, verzweigt und/oder unverzweigt, aufweisen können. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung werden Ester der Phosphonsäure (oft auch als Phosphorigsäureester bezeichnet) mit der allgemeinen Struktur P(OR)₃ verstanden, wobei R für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können.

Unter Phosphonaten werden von der Grundstruktur R-PO(OH)₂ abgeleitete Verbindungen verstanden, wobei R für aliphatische und/oder aromatische Kohlenwasserstoffreste steht, wobei die aromatischen Kohlenwasserstoffreste weitere Substituenten wie zum Beispiel verzweigte und/oder unverzweigte Alkylgruppen aufweisen können. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung werden Ester, insbesondere Diester der phosphonigen Säure vom Typ R-P(OR)₂ verstanden, wobei R für aliphatische und/oder aromatische Kohlenwasserstoffreste steht, wobei die aromatischen Kohlenwasserstoffreste weitere Substituenten wie zum Beispiel Alkylgruppen, verzweigt und/oder unverzweigt, aufweisen können. Die Phosphonite können hierbei ein Phosphor-Atom aufweisen oder aber mehrere, über entsprechende aliphatische und/oder aromatische Kohlenwasserstoffe verbrückte Phosphor-Atome.

Die Reste R in einer Verbindung können jeweils gleich oder verschieden sein.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

Bevorzugt werden Triphenylphosphin (TPP), Trialkylphenylphosphin, Bisdiphenylphosphinoethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

Die Herstellung und Eigenschaften von Phosphinverbindungen sind dem Fachmann bekannt und beispielsweise in EP 0 718 354 A2 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert werden kann. Der oxidierte Anteil steht nicht mehr zur Stabilisierung zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Bevorzugt liegt die Menge an Phosphinstabilisator im Endprodukt bei > 0,01 Gew.-%, weiter bevorzugt bei > 0,02 Gew.-%.

Noch weiter bevorzugt enthalten die erfindungsgemäßen Zusammensetzungen 0,03 bis 0,500 Gew.-%, weiter bevorzugt 0,04 bis 0,07 Gew.-% Phosphin.

Erhältliche, im Rahmen der vorliegenden Erfindung geeignete Phosphitstabilisatoren sind beispielsweise Irgafos® 168 (Tris(2,4-di-tert-butyl-phenyl)-phosphit / CAS-Nr. 31570-04-4), Irgafos® TPP (CAS-Nr. 101-02-0), ADK PEP Stab 36 (CAS-Nr. 80693-00-1), Hostanox® P-EPQ (CAS-Nr. 119345-01-6) und Irgafos® TNPP (CAS-Nr. 26523-78-4), wobei Irgafos® 168 besonders bevorzugt ist.

Zur Gruppe der Antioxidantien zählen insbesondere die sterisch gehinderten Phenole. Mögliche sterisch gehinderte Phenole sind zum Beispiel Ester n-Octadecyl-3-(3,5-di-t.butyl-4-hydroxyphenyl)-propionat oder β-(5-tert.-Butyl-4-hydroxy-3-methylphenyl)propionsäure oder β-(3,5-Dicyclohexyl-4-hydroxyphenyl)propionsäure mit ein- oder mehrwertigen Alkoholen, z. B. mit Methanol, Ethanol, Butanol, n-Octanol, i-Octanol, n-Octadecanol. 1,6-Hexandiol, 1,9-Nonandiol, Ethylenglycol, 1,2-Propandiol, Neopentylglycol, Diethylenglycol, Triethylenglycol, Tris-(hydroxyethyl)isocyanurat, N,N'-Bis(Hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Besonders bevorzugt wird als sterisch gehindertes Phenol n-Octadecyl-3-(3,5-di-t.butyl-4-hydroxyphenyl)-propionat verwendet. Das sterisch gehinderte Phenol wird bevorzugt in Mengen von 0,01 bis 0,1 Gew.-%, bevorzugt 0,015 bis 0,06 Gew.-%, bezogen auf das Gesamtgewicht der Zusammensetzung, eingesetzt.

Kommerziell erhältliche geeignete phenolische Antioxidantien sind beispielsweise Irganox® 1076 (CAS-Nr. 2082-79-3 / 2,6-Di-tert-butyl-4-(octadecanoxycarbonylethyl)phenol) und Irganox® 1010 (CAS-Nr. 6683-19-8).

Die Stabilisatorkombination enthält vorzugsweise
a) 10 Gew.-% - 89 Gew.-%, weiter bevorzugt 20 Gew.-% - 78 Gew.-%, und besonders bevorzugt 30 Gew.-% - 67 Gew.-% mindestens eines Phosphinstabilisators,
b) 10 Gew.-% - 89 Gew.-%, weiter bevorzugt 20 Gew.-% - 78 Gew.-%, und besonders bevorzugt 30 Gew.-% - 67 Gew.-% mindestens eines Phosphitstabilisators, und
c) 1 Gew.-% - 50 Gew.-%, weiter bevorzugt 2 Gew.-% - 40 Gew.-%, und besonders bevorzugt 3 Gew.-% -20 Gew.-% mindestens eines phenolischen Antioxidans,
wobei sich die Summe der Komponenten a)-c) zu 100 Gew.-% addiert.

In einer besonders bevorzugten Ausführungsform besteht die Stabilisatorkombination aus Triphenylphosphin, Irganox 1076® und Bis(2,6-di-t.butyl-4-methylphenyl)pentaerythrityldiphosphit oder aus Triphenylphosphin, Irganox® 1076 und aus Hostanox® P-EPQ, welches ein Diphosphonit als Hauptkomponente umfasst.

Alternativ zu Irganox® 1076 kann Irganox® 1010 (Pentaerythrit- 3-(4-hydroxy-3,5-di-tert-butylphenyl)propionat; CAS-Nr.: 6683-19-8) verwendet werden.

Der Anteil der Stabilisatorkombination an der Gesamtzusammensetzung ist 0,001 Gew.-% - 0,500 Gew.-%, vorzugsweise 0,005 Gew.-% - 0,300 Gew.%, weiter bevorzugt 0,05 bis 0,270 Gew.-%, besonders bevorzugt 0,15 Gew.% - 0,25 Gew.%, bezogen auf das Gesamtgewicht der Zusammensetzung.

In einer bevorzugten Ausführungsform beträgt das Verhältnis von Phosphit-Stabilisator zu phenolischem Antioxidans 1:5 bis 10:1, weiter bevorzugt 1:5 bis 5:1 und besonders bevorzugt von 3:1 bis 4:1.

In einer weiteren bevorzugten Ausführungsform beträgt das Verhältnis von Phosphin (a) zum Gemisch aus Phosphit und phenolischen Antioxidans (b+c) bevorzugt 8:1 bis 1:9, weiter bevorzugt 1:5 bis 5:1 wobei das Verhältnis von Phosphit-Stabilisator (b) zu phenolischem Antioxidans (c) von 1: 5 bis 10:1, weiter bevorzugt von 1:5 bis 5:1 und besonders bevorzugt von 3:1 bis 4:1 beträgt.

Um die thermoplastische Matrix zu stabilisieren, können weitere Phosphor-basierte Stabilisatoren oder andere Thermostabilisatoren eingesetzt werden, solange diese den Effekt der oben beschriebenen Stabilisierung nicht negativ beeinflussen.

### Komponente E

Den Zusammensetzungen, enthaltend aromatisches Polycarbonat, können als weitere Additive noch ein oder mehrere der für Polycarbonat-Zusammensetzungen üblichen Additive wie Flammschutzmittel, Antitropfmittel, Schlagzähmodifikatoren, Füllstoffe, Antistatika, Farbmittel, einschließlich von Komponente B verschiedenen Pigmenten, auch umfassend Ruß, Gleit- und/oder Entformungsmittel, UV-Absorber, IR-Absorber, Hydrolysestabilisatoren und/oder Verträglichkeitsvermittler zugesetzt werden. Die Gruppe der weiteren Additive umfasst keine Pigmente gemäß Komponente B, d.h. keine Perlglanz- und/oder Interferenzpigmente aus der Gruppe der Metalloxid-beschichteten Glimmer, und keine Epoxidgruppen-haltigen Copolymere oder Terpolymere aus Styrol und Acrylsäure und/oder Methacrylsäure, da diese als Komponente C bezeichnet sind. Außerdem umfasst die Gruppe der weiteren Additive gemäß Komponente E keine Thermostabilisatoren, da diese bereits durch die ggf. vorhandene Komponente D erfasst sind.

Die Menge an weiteren Additiven beträgt bevorzugt bis zu 10 Gew.-%, weiter bevorzugt bis zu 7 Gew.-%, noch weiter bevorzugt bis zu 5 Gew.-%, besonders bevorzugt 0,01 bis 3 Gew.-%, ganz besonders bevorzugt bis zu 1 Gew.-%, bezogen auf die Gesamtzusammensetzung.

Besonders geeignete Entformungsmittel für die erfindungsgemäßen Zusammensetzungen sind Pentaerythrittetrastearat (PETS) oder Glycerinmonostearat (GMS), deren Carbonate und/oder Mischungen dieser Entformungsmittel.

Farbmittel einschließlich Pigmenten im Sinne der vorliegenden Erfindung gemäß Komponente E sind beispielsweise Schwefel-haltige Pigmente wie Cadmium Red und Cadmium Gelb, Eisencyanid-basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen-basiertes Braun, Titan-Cobaltbasiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin Blau und Kupfer-Phthalocyanin Grün, kondensierte polycyclische Farbstoffe und Pigmente wie Azo-basierte (z.B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme, jedenfalls keine Perlglanzpigmente und/oder Interferenzpigmente aus der Gruppe der Metalloxid-beschichteten Glimmer.

Konkrete Beispiele für Handelsprodukte sind z.B. MACROLEX® Blau RR, MACROLEX® Violett 3R, MACROLEX® EG, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF AG, Deutschland).

Von diesen sind Cyaninderivate, Chinolinderivate, Anthrachinonderivate, Phthalocyaninderivate bevorzugt.

Als Ruße kommen vorzugsweise nanoskalige Ruße, weiter bevorzugt nanoskalige Farbruße, zum Einsatz. Bevorzugt besitzen diese eine mittlere Primärpartikelgröße, bestimmt durch Rasterelektronenmikroskopie, von weniger als 100 nm, bevorzugt von 10 bis 99 nm, weiter bevorzugt von 10 bis 50 nm, besonders bevorzugt von 10 bis 30 nm, insbesondere von 10 bis 20 nm. Die feinteiligen Farbruße sind besonders bevorzugt.

Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - erhältlich, alle von Cabot Corporation. Insbesondere bevorzugt sind Ruße, die unter dem Handelsnamen BLACK PEARLS® (CAS-Nr. 1333-86-4) gehandelt werden.

Optional enthält die Zusammensetzung einen Ultraviolett-Absorber. Geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in EP 0 839 623 A1, WO 1996/15102 A2 und EP 0 500 496 A1 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Folgende Ultraviolett-Absorber sind beispielsweise geeignet: Hydroxy-Benzotriazole, wie 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), 2-(2'-Hydroxy-3'-(2-butyl)-5'-(tert.butyl)-phenyl)-benzotriazol (Tinuvin® 350, BASF SE, Ludwigshafen), Bis-(3-(2H-benztriazolyl)-2-hydroxy-5-tert.-octyl)methan, (Tinuvin® 360, BASF SE, Ludwigshafen), (2-(4,6-Diphenyl-1,3,5-triazin-2-yl)-5-(hexyloxy)-phenol (Tinuvin® 1577, BASF SE, Ludwigshafen), die Benzophenone 2,4-Dihydroxy-benzophenon (Chimasorb® 22, BASF SE, Ludwigshafen) oder 2-Hydroxy-4-(octyloxy)-benzophenon (Chimassorb® 81, BASF SE, Ludwigshafen), 2-Cyano-3,3-diphenyl-2-propensäure, 2,2-Bis[[(2-cyano-1-oxo-3,3-diphenyl-2-propenyl)oxy]-methyl]-1,3-propandiylester (9CI) (Uvinul® 3030, BASF SE, Ludwigshafen), 2-[2-Hydroxy-4-(2-ethylhexyl)oxy]phenyl-4,6-di(4-phenyl)phenyl-1,3,5-triazin (CGX UVA 006, BASF SE, Ludwigshafen) oder Tetraethyl-2,2'-(1,4-phenylen-dimethyliden)-bismalonat (Hostavin® B-Cap, Clariant AG). Es können auch Mischungen dieser Ultraviolett-Absorber eingesetzt werden.

Geeignete IR-Absorber sind beispielsweise in EP 1 559 743 A1, EP 1 865 027 A1, DE 10 022 037 A1 und DE 10 006 208 A1 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Als Schlagzähmodifikatoren können übliche Schlagzähmodifikatoren enthalten sein. Diese Gruppe umfasst sowohl Kern/Schale-basierte Systeme wie ABS, MBS, Acryl-basierte, Silikon-Acryl-basierte Schlagzähmodifikatoren, aber auch nicht Kern-Schale-basierte Schlagzähmodifikatoren.

Der Polycarbonat-Zusammensetzung können organische und anorganische Füllstoffe in üblichen Mengen zugesetzt werden. In Frage kommen hierfür prinzipiell alle feinvermahlenen organischen und anorganischen Materialien. Diese können z.B. partikel-, schuppenförmigen oder faserförmigen Charakter haben. Beispielhaft seien an dieser Stelle Kreide, Quarzpulver, Titandioxid, Silikate/Aluminosilikate wie z.B. Talk, Wollastonit, Montmorillonit, insbesondere auch in einer durch Ionenaustausch modifizierten, organophilen Form, Kaolin, Zeolithe, Vermiculit sowie Aluminiumoxid, Silica, Magnesiumhydroxid und Aluminiumhydroxid genannt. Es können auch Mischungen verschiedener anorganischer Materialien zum Einsatz kommen.

Bevorzugte anorganische Füllstoffe sind feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe, besonders bevorzugt auf der 3. bis 5. Hauptgruppe, bzw. auf der 4. bis 8. Nebengruppe, mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und/oder Hydride.

Als Antitropfmittel wird bevorzugt Polytetrafluoroethylen (PTFE) verwendet, insbesondere in Mengen von 0,2 bis 0,8 Gew.-%.

Es versteht sich, dass die eingesetzten Komponenten übliche Verunreinigungen, die beispielsweise aus ihrem Herstellungsprozess herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Erfindungsgemäß besonders bevorzugte thermoplastische Zusammensetzungen sind solche, enthaltend
A) 90,0 Gew.-% bis 97,5 Gew.-%, bevorzugt 93,0 Gew.-% bis 97,5 Gew.-%, aromatisches Polycarbonat, bevorzugt mit einer MVR von 5 bis 20 cm³/(10 min), bestimmt nach ISO 1133:2012-03 bei einer Prüftemperatur von 300 °C und 1,2 kg Belastung,
B) 1,0 bis 2,5 Gew.-%, bevorzugt 1,2 bis 2,0 Gew.-%, Perlglanzpigment und/oder Interferenzpigment aus der Gruppe der mit Titandioxid beschichteten Glimmer, besonders bevorzugt umfassend mindestens 98 Gew.-% Anatas-beschichteten Glimmer,
C) 0,1 Gew.-% bis 2,0 Gew.-%, besonders bevorzugt 0,2 Gew-% bis 1,2 Gew.-%, Epoxidgruppen-haltiges Copolymer oder Terpolymer aus Styrol und Acrylsäure und/oder Methacrylsäure,
D) 0,001 Gew.-% bis 0,500 Gew.-%, bevorzugt 0,05 bis 0,270 Gew.-%, eines oder mehrerer Thermostabilisatoren, bevorzugt umfassend
   i) Phosphin, Phosphit und phenolisches Antioxidans oder
   ii) Phosphin, Phosphonit und phenolisches Antioxidans,
E) bis zu 7 Gew.-%, bevorzugt bis zu 5 Gew.-%, besonders bevorzugt 0,1 bis 3 Gew.-%, ganz besonders bevorzugt bis zu 1 Gew.-% weitere Additive, äußerst bevorzugt ausgewählt aus der Gruppe, bestehend aus Flammschutzmitteln, Antitropfmitteln, Schlagzähmodifikatoren, Füllstoffen, Antistatika, Farbmitteln, einschließlich von Komponente B verschiedenen Pigmenten, auch umfassend Ruß, Gleit- und/oder Entformungsmitteln, Hydrolysestabilisatoren, Verträglichkeitsvermittlern, UV-Absorbern und/oder IR-Absorbern.

"Bis zu" umfasst erfindungsgemäß jeweils den sich diesen Worten anschließenden Wert als Obergrenze.

Dabei besteht die Gruppe der weiteren Additive gemäß Komponente E ganz besonders bevorzugt nur aus Farbmitteln, Entformungsmitteln, von Komponente B verschiedenen Pigmenten, insbesondere Ruß.

Erfindungsgemäß ganz besonders bevorzugte thermoplastische Zusammensetzungen enthalten
A) 90,0 Gew.-% bis 97,5 Gew.-% aromatisches Polycarbonat, bevorzugt mit einer MVR von 5 bis 12 cm³/(10 min), bestimmt nach ISO 1133:2012-03 bei einer Prüftemperatur von 300 °C und 1,2 kg Belastung,
B) 1,2 bis 2,0 Gew.-%, bevorzugt 1,5 bis 2,0 Gew.-%, Perlglanz- und/oder Interferenzpigment aus der Gruppe der mit Metalloxid-beschichteten Glimmer,
C) 0,2 Gew.-% bis ≤ 1 Gew.-%, besonders bevorzugt 0,3 Gew.-% bis 0,8 Gew-%, Epoxidgruppen-haltiges Copolymer oder Terpolymer aus Styrol und Acrylsäure und/oder Methacrylsäure,
D) 0,05 Gew.-% bis 0,270 Gew.-%, äußerst bevorzugt 0,10 Gew.-% bis 0,25 Gew.-%, eines oder mehrerer Phosphor-haltige Thermostabilisatoren, umfassend, äußerst bevorzugt bestehend aus
   i) Phosphin, Phosphit und phenolisches Antioxidans oder
   ii) Phosphin, Phosphonit und phenolisches Antioxidans
E) bis zu 7 Gew.-%, bevorzugt bis zu 3 Gew.-%, äußerst bevorzugt bis zu 1 Gew.-%, weitere Additive, wobei die weiteren Additive äußerst bevorzugt ausgewählt sind aus der Gruppe, bestehend aus Farbmitteln, Gleitmitteln, Entformungsmitteln, von Komponente B verschiedenen Pigmenten, insbesondere Ruß,
wobei Komponente b Titandioxid beschichteter Glimmer, äußerst bevorzugt umfassend mindestens 98 Gew.-% Anatas-beschichteten Glimmer, ist.

Äußerst bevorzugt enthalten die thermoplastischen Zusammensetzungen enthalten keine weiteren Komponenten.

Die Herstellung der erfindungsgemäßen Polymer-Zusammensetzungen, enthaltend die oben genannten Komponenten, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten und vorgenannten Additive der erfindungsgemäßen Zusammensetzungen durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Herstellung der Kunststoffformteile aus den erfindungsgemäßen Zusammensetzungen kann vorzugsweise durch Spritzguss, Extrusion oder Rapid-Heatcycle Moulding erfolgen.

Die erfindungsgemäßen Zusammensetzungen werden bevorzugt für die Herstellung von Spritzgussteilen, insbesondere dünnwandigen, mit Perlglanzoptik verwendet. Ebenso bevorzugt werden die erfindungsgemäßen Zusammensetzungen für die Herstellung von Extrudaten verwendet. Spritzugussteile und Extrudate werden erfindungsgemäß verstanden als "Formteile".

"Dünnwandig" im Sinne der vorliegenden Erfindung sind solche Formteile, bei denen Wandstärken an den dünnsten Stellen von weniger als etwa 3 mm, bevorzugt weniger als 3 mm, weiter bevorzugt von weniger als 2,5 mm, noch weiter bevorzugt von weniger als 1,5 mm, besonders bevorzugt von weniger als 0,5 mm vorliegen. "Etwa" bedeutet hierbei, dass der tatsächliche Wert nicht wesentlich vom genannten Wert abweicht, wobei eine Abweichung von nicht größer als 25%, bevorzugt nicht größer als 10%, als "nicht wesentlich" gilt. Gegenstand der Erfindung sind daher auch entsprechende Formteile, enthaltend bzw. bestehend aus diesen Zusammensetzungen, zusammengefasst als "Formteile aus diesen Zusammensetzungen".

Diese Kunststoffformteile, bestehend aus bzw. umfassend die erfindungsgemäßen Zusammensetzungen, sind ebenfalls Gegenstand der vorliegenden Erfindung.

### Beispiele

- **A:**: Makrolon® 3108-Pulver der Covestro Deutschland AG. Lineares Polycarbonat auf Basis von Bisphenol A mit einer Schmelze-Volumenfließrate MVR von 6 cm³/(10 min) (gemäß ISO 1133:2012-03, bei einer Prüftemperatur 300°C und 1,2 kg Belastung).
- **B:**: Perlglanzpigment. Anatas-beschichteter Glimmer Mearlin® Magnapearl® 3000 der Firma BASF.
- **C:**: Copolymer aus Styrol und 2,3-Epoxypropylmethacrylat. Styrol-Anteil: 53 Gew.-%, bestimmt mittels ¹H-NMR-Spektroskopie in CDCl₃. M_{w} = 7400 g/mol, bestimmt mittels Gelpermeationschromatographie in o-Dichlorbenzol bei 150°C unter Verwendung von Polystyrol-Standards. Der Epoxidgehalt, bestimmt nach DIN EN 1877-1:2000, beträgt 14 Gew.-%.
- **D-1:**: ADK STAB® PEP-36, Bis(2,6-di-t-butyl-4-methylphenyl)pentaerythritoldiphosphit, erhältlich bei der Firma Adeka Palmarole.
- **D-2:**: Hostanox PEPQ. Stabilisator-Mischung, enthaltend als Hauptkomponente Tetrakis(2,4-di-tert-butylphenyl)-4,4'-biphenyldiphosphonit, erhältlich bei der Firma Clariant.
- **D-3:**: Irganox® 1076, n-Octadecyl-3-(3,5-di-t.butyl-4-hydroxyphenyl)-propionat, erhältlich bei der Firma BASF SE.
- **D-4:**: Irganox® B900, Mischung aus vier Teilen Irgafos® 168 und einem Teil Irganox® 1076. Irgafos® 168: Tris(2,4-tert-butylphenyl)phosphit, erhältlich bei der Firma BASF SE.
- **D-5:**: Triphenylphosphin, erhältlich bei der Firma BASF SE.
- **E-1:**: Pentaerythrittetrastearat; Loxiol VPG 861 von Emery Oleochemicals.
- **E-2:**: Mischung aus üblichen Farbmitteln einschließlich Ruß.

Die in den folgenden Beispielen beschriebenen Polycarbonatzusammensetzungen wurden auf einem Extruder Evolum EV32 der Firma Clextral mit einem Durchsatz von 50 kg/h durch Compoundierung hergestellt. Die Schmelzetemperatur betrug 300°C.

Die Bestimmung des **Schmelze-Volumenfließrate** (MVR) erfolgte nach ISO 1133:2012-03 (bei einer Prüftemperatur von 300 °C, Masse 1,2 kg) mit dem Gerät Zwick 4106 der Firma Zwick Roell.

**Tabelle 1: Zusammensetzungen und MVR**

| | **1V** | **2V** | **3V** | **4V** | **5V** | **6E** | **7E** | **8V** | **9V** | **10V** | **11V** |
|---|---|---|---|---|---|---|---|---|---|---|---|
| | **[Gew.-%]** | **[Gew.-%**] | **[Gew.-%**] | **[Gew.-%**] | **[Gew.-%**] | **[Gew.-%]** | **[Gew.-%]** | **[Gew.-%]** | **[Gew.-%**] | **[Gew.-%**] | **[Gew.-%**] |
| **A** | 97,48 | 97,38 | 97,28 | 97,38 | 97,28 | 97,18 | 96,98 | 97,38 | 97,28 | 97,48 | 97,48 |
| **B** | 1,94 | 1,94 | 1,94 | 1,94 | 1,94 | 1,94 | 1,94 | 1,94 | 1,94 | 1,94 | 1,94 |
| **C** | | | | | | 0,2 | 0,4 | | | | |
| **D-1** | | 0,08 | 0,16 | | | 0,08 | 0,08 | | | | |
| **D-2** | | | | 0,08 | 0,16 | | | | | | |
| **D-3** | | 0,02 | 0,04 | 0,02 | 0,04 | 0,02 | 0,02 | | | | |
| **D-4** | | | | | | | | 0,1 | 0,2 | | |
| **D-5** | 0,05 | 0,05 | 0,05 | 0,05 | 0,05 | 0,05 | 0,05 | 0,05 | 0,05 | 0,05 | 0,05 |
| **E-1** | 0,4 | 0,4 | 0,4 | 0,4 | 0,4 | 0,4 | 0,4 | 0,4 | 0,4 | 0,4 | 0,4 |
| **E-2** | 0,13 | 0,13 | 0,13 | 0,13 | 0,13 | 0,13 | 0,13 | 0,13 | 0,13 | 0,13 | 0,13 |
| | | | | | | | | | | | |
| **MVR** [cm³/(10 min)] | 12,74 | 11,57 | 9,72 | 12,64 | 12,09 | 7,1 | 6,8 | 12,57 | 14,21 | 11,78 | 17,83 |

## Patentansprüche

1. Thermoplastische Zusammensetzung, enthaltend
A) 50 Gew.-% bis 98,5 Gew.-% aromatisches Polycarbonat und
B) 0,8 Gew.-% bis ≤ 5,0 Gew.-% Interferenzpigment und/oder Perlglanzpigment aus der Gruppe der Metalloxid-beschichteten Glimmer,
**dadurch gekennzeichnet, dass** die Zusammensetzung außerdem
C) 0,05 Gew.-% bis ≤ 3 Gew.-% eines Epoxidgruppen-haltigen Copolymers oder Terpolymers aus Styrol und Acrylsäure und/oder Methacrylsäure enthält.

2. Thermoplastische Zusammensetzung nach Anspruch 1, enthaltend
A) 90,0 Gew.-% bis 97,5 Gew.-% aromatisches Polycarbonat,
B) 1,0 bis ≤ 3,0 Gew.-% Interferenzpigment und/oder Perlglanzpigment aus der Gruppe der Metalloxid-beschichteten Glimmer,
C) 0,2 Gew.-% bis ≤ 1 Gew.-% eines Epoxidgruppen-haltigen Copolymers oder Terpolymers aus Styrol und Acrylsäure und/oder Methacrylsäure .

3. Thermoplastische Zusammensetzung nach Anspruch 1 oder 2, enthaltend 1,2 bis 2,0 Gew.-% Interferenzpigment und/oder Perlglanzpigment aus der Gruppe der Metalloxid-beschichteten Glimmer.

4. Thermoplastische Zusammensetzung nach einem der vorhergehenden Ansprüche, wobei die Zusammensetzung
D) 0,001 Gew.-% bis 0,500 Gew.-% eines oder mehrerer Thermostabilisatoren enthält.

5. Thermoplastische Zusammensetzung nach Anspruch 4, wobei Komponente D ein oder mehrere Phosphite als Thermostabilisator umfasst.

6. Thermoplastische Zusammensetzung nach Anspruch 4, wobei Komponente D
i) Phosphin, Phosphit und phenolisches Antioxidans oder
ii) Phosphin, Phosphonit und phenolisches Antioxidans
als Phosphor-haltige Thermostabilisatoren umfasst.

7. Thermoplastische Zusammensetzung nach einem der vorhergehenden Ansprüche, wobei als Thermostabilisator Bis(2,6-di-t-butyl-4-methylphenyl)pentaerythritoldiphosphit enthalten ist.

8. Thermoplastische Zusammensetzung nach einem der vorhergehenden Ansprüche, wobei das Epoxidgruppen-haltige Copolymer oder Terpolymer aus Styrol und Acrylsäure und/oder Methacrylsäure ein Copolymer aus Styrol und 2,3-Epoxypropylmethacrylat umfasst.

9. Thermoplastische Zusammensetzung nach einem der vorhergehenden Ansprüche, wobei Komponente C ein Copolymer aus Styrol und 2,3-Epoxypropylmethacrylat ist.

10. Thermoplastische Zusammensetzung nach Anspruch 9, wobei Komponente C einen Styrol-Gehalt, bestimmt mittels ¹H-NMR-Spektroskopie in CDCl₃, von 30 bis 70 Gew.-%, eine gewichtsmittlere Molmasse, bestimmt mittels Gelpermeationschromatographie in o-Dichlorbenzol bei 150°C unter Verwendung von Polystyrol-Standards, von 2000 bis 25000 g/mol und einen Epoxid-Anteil, bestimmt nach DIN EN 1877-1:2000, von 5 bis 20 Gew.-%, aufweist.

11. Thermoplastische Zusammensetzung nach einem der vorhergehenden Ansprüche, wobei als Perlglanz- und/oder Interferenzpigment aus der Gruppe der Metalloxid-beschichteten Glimmer Anatas- oder Rutil-beschichteter Glimmer enthalten ist.

12. Thermoplastische Zusammensetzung nach einem der vorhergehenden Ansprüche, wobei die Zusammensetzung
A) 90,0 Gew.-% bis 97,5 Gew.-% aromatisches Polycarbonat,
B) 1,2 Gew.-% bis 2,0 Gew.-% Perlglanz- und/oder Interferenzpigment aus der Gruppe der mit Metalloxid-beschichteten Glimmer,
C) 0,1 Gew.-% bis ≤ 1 Gew.-% eines Epoxidgruppen-haltigen Copolymers oder Terpolymers aus Styrol und Acrylsäure und/oder Methacrylsäure,
D) 0,001 Gew.-% bis 0,500 Gew.-% eines oder mehrerer Thermostabilisatoren,
E) 0 bis 7 Gew.-% weitere Additive, ausgewählt aus der Gruppe, bestehend aus Flammschutzmitteln, Antitropfmitteln, Schlagzähmodifikatoren, Füllstoffen, Antistatika, Farbmitteln, einschließlich von Komponente B verschiedenen Pigmenten, auch umfassend Ruß, Gleitmitteln, Entformungsmitteln, Hydrolysestabilisatoren, Verträglichkeitsvermittlern, UV-Absorbern und/oder IR-Absorbern,
enthält, wobei Komponente B ein Perlglanz- und/oder Interferenzpigment aus der Gruppe der mit Titandioxid-beschichteten Glimmer und das Polymer gemäß Komponente C ein Copolymer aus Styrol und 2,3-Epoxypropylmethacrylat ist.

13. Thermoplastische Zusammensetzung nach Anspruch 12, wobei die Zusammensetzung keine weiteren Komponenten enthält.

14. Thermoplastische Zusammensetzung nach Anspruch 12 oder 13, wobei als weitere Additive gemäß Komponente E nur ggf. Farbmittel, Entformungsmittel und/oder von Komponente B verschiedene Pigmente enthalten sind.

15. Formteil, hergestellt aus einer thermoplastischen Zusammensetzung nach einem der Ansprüche 1 bis 14.
